# EUROPÄISCHE PATENTSCHRIFT

(11) **EP 4 299 338 B1**
(45) Veröffentlichungstag und Bekanntmachung des Hinweises auf die Patenterteilung: **14.01.2026**
(21) Anmeldenummer: 23206400.6
(22) Anmeldetag: 05.05.2015
(51) Int. Cl.: B60B 27/00, F16C 33/72, B60B 27/02

(54) **RADNABENANORDNUNG FÜR EIN FAHRZEUGRAD SOWIE POLRING EINES ABS-SENSORS**
WHEEL HUB ASSEMBLY FOR A VEHICLE WHEEL AND POLE RING OF AN ABS SENSOR
SYSTÈME DE MOYEU DE ROUE DE VÉHICULE ET BAGUE POLAIRE D'UN CAPTEUR ABS

(30) Priorität: 09.05.2014 DE 102014106519
(43) Veröffentlichungstag der Anmeldung: 03.01.2024
(62) Teilanmeldung aus: 15725486.3
(73) Patentinhaber: BPW Bergische Achsen KG, 51674 Wiehl (DE)
(72) Erfinder: Iliev, Rossen, 51429 Bergisch Gladbach (DE); Siebel, Reiner, 53804 Much (DE); Wasserfuhr, Wilfried, 51709 Marienheide (DE)
(74) Vertreter: DREISS Patentanwälte PartG mbB

(56) Entgegenhaltungen:
- EP-A2- 0 675 364
- DE-A1- 102010 013 214
- US-A- 4 017 756
- US-A- 4 795 278

## Beschreibung

Die Erfindung betrifft einen Polring eines ABS-Sensors zur Drehsensierung eines Fahrzeugrades nach dem Oberbegriff des Patentanspruchs 1. Die Erfindung betrifft auch eine Radnabenanordnung mit einem Polring.

Eine gattungsgemäße Radnabenanordnung mit Polring ist aus der DE 2011 000 626 A1 bekannt. Die Radnabe ist über eine Nabenlagerung drehbar auf einem drehfesten Achsschenkel angeordnet und endet fahrzeuginnen in einem Nabenhals, dessen

Innenumfang eine Öffnung für den zentralen Durchtritt des Achsschenkels, auf dem die Radnabe drehgelagert ist, definiert. Der Außenumfang des Nabenhalses ist dazu ausgebildet, den Polring eines ABS-Sensors zu befestigen. Hierzu ist der Polring mit einem Befestigungsabschnitt versehen, der von außen her auf dem Außenumfang des Nabenhalses abgestützt ist. Bestandteil des Polrings ist ferner ein zu dem Befestigungsabschnitt des Polrings einstückiger Impulsgeberabschnitt, der sich, ausgehend von dem Befestigungsabschnitt, zu der zentralen Achse der Radnabe hin erstreckt. Auf dem Impulsgeberabschnitt ist der Polring mit in Umfangsrichtung gleichmäßig verteilten Schlitzen versehen. Der ABS-Sensor ist im Bereich des Achsschenkels so befestigt, dass er den Schlitzen exakt gegenüberliegt, und so die Drehgeschwindigkeit des Polrings sensiert und in ein entsprechendes Steuersignal eines Antiblockiersystems oder, im Falle einer angetriebenen Fahrzeugachse, in ein Steuersignal einer Antriebsregelung überführt wird.

Eine ähnlich aufgebaute Anordnung aus einer Radnabe und einem daran befestigten Polring ist z. B. aus der DE 3 49 303 B3 und der US 4 017 756 A bekannt.

Die EP 0 675 364 A2 offenbart einen auf einem äußeren Rollenlagerteil installierten Polring mit Schlitzen. Zwar wird das näher dargestellte Ringelement als Dichtung bezeichnet allerdings handelt es sich neben der Funktion als Dichtung auch um einen Polring dessen sensierbare Öffnungen durch das Material der Dichtung vollständig verschlossen sind.

Auch aus der US 4 795 278 A und der DE 10 2010 013214 A1 sind Radnabenanordnungen bzw. Polringe bekannt.

Gemeinsam ist den Radnabenanordnungen aus dem Stand der Technik, dass, vom Inneren der Nabe her betrachtet, der an der fahrzeuginneren Öffnung der Radnabe angeordnete Polring eine Stufe oder Kante darstellt an der sich, wenn der betreffende Umfangsabschnitt unten liegt, Schmutzwasser oder auch feine Schmutzpartikel absetzen und ansammeln können. In der Folge und abhängig von den verwendeten Materialien kann es dort auf Dauer zur Bildung von Rost kommen. Dieser Effekt wird verstärkt, je mehr von fahrzeuginnen her Schmutz hinter den Polring gelangt, und sich solcher Schmutz dann zwischen dem Polring und der dahinter im Nabeninneren angeordneten Lagerabdichtung ansammelt. Auch dieser Schmutz, vor allem Grobschmutz, kann auf Dauer zu den beschriebenen Korrosionsproblemen führen. Die Folgen können ein unlösbares Festsitzen des Polrings auf der Nabe sein, oder ein unzureichender Planlauf des Polrings, was wiederum Folgen für die Genauigkeit des ABS-Sensorsignals hat.

Der Erfindung liegt daher die **Aufgabe** zugrunde, Lösungen für die Verschmutzungs- und damit verbundenen Korrosionsprobleme im Bereich zwischen dem Polring und dem dahinter angeordneten Nabeninneren zu schaffen.

Zur **Lösung** wird zum einen ein Polring mit den Merkmalen des Anspruchs 1, und zum anderen eine Radnabenanordnung mit einem Polring mit den Merkmalen des Anspruchs 7 vorgeschlagen.

Zur Lösung der genannten Aufgabe wird also ein Polring eines ABS-Sensors zur Drehsensierung eines Fahrzeugrades mit den Merkmalen des Anspruch1 vorgeschlagen.

Aus Gründen der mechanischen Festigkeit des Polrings ist die radiale Erstreckung der nicht verlängerten Öffnungen bzw. Schlitze möglichst gering und beschränkt sich auf die für die Sensierung durch den ABS-Sensor technisch notwendige Erstreckung. Durch die einzelnen verlängerten Öffnungen bzw. Schlitze hingegen kann Flüssigkeit und Feinschmutz, der sich hinter dem Polring angesammelt hat, austreten, wobei dies selbst für den Fall gilt, dass sich der betreffende Umfangsabschnitt des Polrings unten befindet.

Auf diese Weise wird erreicht, dass in den Bereich hinter dem Polring eingedrungenes Schmutzwasser oder auch kleine Partikel durch die nach außen hin verlängerten Öffnungen bzw. Schlitze auch wieder austreten kann, und zwar selbst dann, wenn sich der betreffende Umfangsabschnitt des Polrings bzw. der Radnabe unten befindet.

Diese Art der Entwässerung gelingt bei einem Polring für eine Radnabenanordnung einer Schwerlast-Nutzfahrzeugachse besonders gut, wenn die Erstreckung nach außen hin zwischen 2 und 10 mm größer ist, als die für die zuverlässige Sensierung durch die ABS Sensoreinheit notwendige Erstreckung.

Eine andere Ausgestaltung sieht vor, dass zur Montage des Polrings der Außenumfang der Radnabe im Befestigungsbereich spanend bearbeitet und mit einer Rostschutzschicht oder einer Rostschutzlackierung versehen ist.

Bevorzugt ist ferner eine Ausgestaltung, bei der der Polring auf den Außenumfang der Radnabe aufgepresst und dort ausschließlich reibschlüssig gehalten ist.

Mit weiteren Ausgestaltungen wird für den Polring vorgeschlagen, dass dessen axiale Abstützung ausschließlich an einer zwischen dem Innenumfang und dem Außenumfang des Nabenhalses ausgebildeten Stirnfläche erfolgt, und dass für eine hohe mechanische Festigkeit des Polrings dessen Impulsgeberabschnitt an seinem Innenrand mit einer verstärkenden Umbördelung versehen ist. Der Außenrand der Umbördelung bestimmt dann die verbleibende, für gröbere Partikel nicht mehr passierbare Rest-Öffnungsbreite des Polrings gegenüber dem Achselement.

Um die Entwässerung bzw. die Befreiung von Feinschmutz zusätzlich zu verbessern, kann der Nabenhals im Übergang zwischen der Stirnfläche und dem Innenumfang mit einer umlaufenden schrägen Fase versehen sein. Vorzugsweise weist die schräge Fase einen Winkel zwischen 20° und 65° zur Radnabenachse auf, und eine radiale Erstreckung von mindestens 2 mm.

Die an dem Impulsgeberabschnitt des Polrings ausgebildeten, nach außen hin vergrößerten bzw. verlängerten Schlitze sollten für eine ausreichende Entwässerung eine Erstreckung aufweisen, die mindestens bis zum Radius des Innenumfangs des Nabenhalses reicht, und vorzugsweise, im Fall einer im Übergang zwischen der Stirnfläche und dem Innenumfang des Nabenhalses vorhandenen, umlaufenden Fase, eine Erstreckung, die nach außen hin bis zu dem größten Radius dieser Fase reicht.

Diesen technischen Lösungen ist gemeinsam, dass die normalerweise durch den Fahrbetrieb verursachten Verschmutzungsprobleme in dem hinter dem Polring liegenden Bereich der Radnabe durch an dem Polring ansetzende technische Maßnahmen beseitigt, zumindest aber deutlich reduziert werden. Auf diese Weise lassen sich z. B. Korrosionsprobleme verringern.

Weiter ist denkbar, dass sich der Polring mit seinem Impulsgeberabschnitt derart weit zu der Radnabenachse hin erstreckt, dass durch den Impulsgeberabschnitt die Öffnung zwischen der Radnabe und der Außenseite des Achsschenkels größtenteils zum Nabeninneren hin abgedeckt ist.

Bei dieser Anordnung führt die Größe und Fläche des Polrings in Verbindung mit der Gestaltung der Radnabe aber auch des Achsschenkels dazu, dass eine Barriere geschaffen wird, durch die zumindest das Eindringen grober Schmutzpartikel in den Bereich hinter den Polring und damit in das Nabeninnere deutlich reduziert wird. Dieser Effekt wird umso besser erzielt, je größer die Abdeckung der Öffnung zwischen der Radnabe und dem Außenumfang des Achsschenkels durch den Polring erreicht wird.

Für eine ausreichende Abdeckung sollte der Polring diese Öffnung zu mindestens 80 %, bezogen auf die Querschnittsfläche der Öffnung, abdecken. Umgekehrt beträgt in diesem Fall die Breite des Restspalts zwischen dem dem Achsschenkel zugewandten Rand des Polrings und der Außenseite des Achsschenkels maximal 20 % des radialen Abstands zwischen der Innenseite der Radnabe und der Außenseite des Achsschenkels.

Vorzugsweise sollte, wenn der Impulsgeberabschnitt mit in Umfangsrichtung gleichmäßig verteilten Schlitzen versehen ist, der aufgrund der Abdeckung durch den Polring noch verbleibende Restspalt gleich oder geringer sein, als die Breite der Schlitze. Partikel und vor allem kleine Steinchen, die die Schlitze wegen deren geringer Breite nicht mehr passieren können, werden dann auch im Bereich der verbleibenden Rest-Öffnungsbreite sicher zurückgehalten.

Ein Ausführungsbeispiel der Erfindung ist in der nachfolgenden Beschreibung erläutert, wobei auf die Zeichnungen Bezug genommen wird. Darin zeigen:
- Fig. 1: In perspektivischer Darstellung eine Radnabe für ein Fahrzeugrad mit einem daran montierten Polring, welcher Bestandteil einer Vorrichtung zur Drehzahl- und/oder Drehrichtungserkennung an der Radnabe ist,
- Fig. 2: einen Schnitt durch die drehbar auf einem zentralen Achsschenkel gelagerte Radnabe mit dem daran befestigten Polring, wobei zusätzlich ein ABS-Sensor wiedergegeben ist;
- Fig. 2a: eine vergrößerte Teildarstellung der Gegenstände nach Fig. 2 im Bereich des Nabenhalses der Radnabe;
- Fig. 3: eine perspektivische Ansicht nur des Polrings.

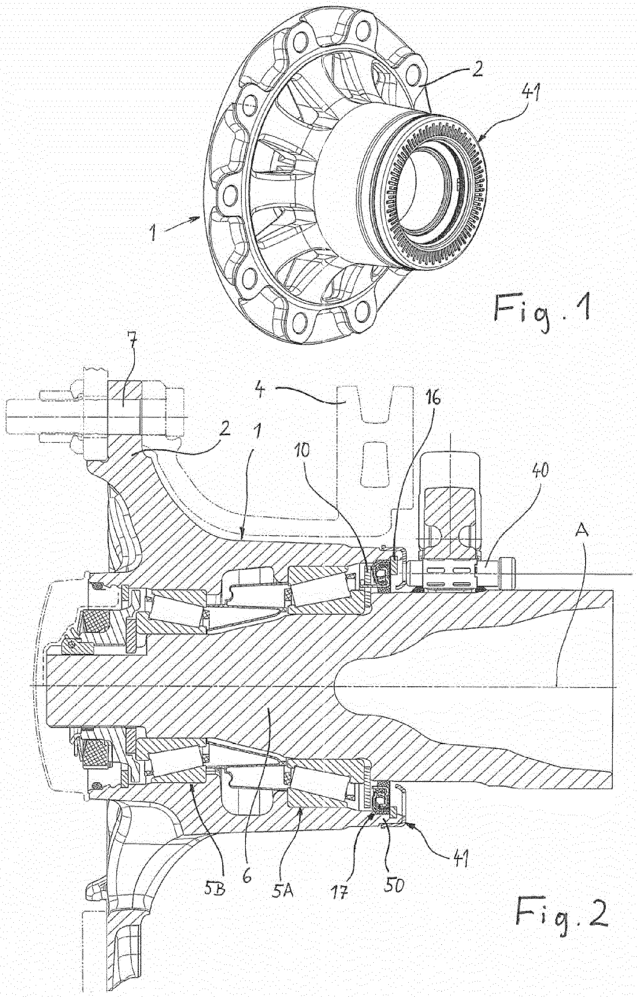

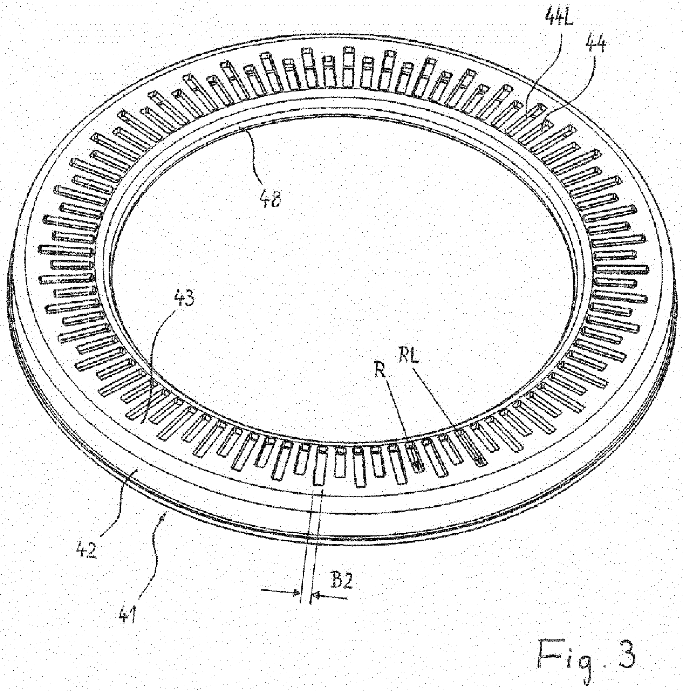

Die Figur 1 zeigt eine Radnabeneinheit, welche in montiertem Zustand auf einem Achsschenkel 6 (Fig. 3) drehbar angeordnet ist. Zwei solche Achsschenkel 6 befinden sich vorzugsweise an den Enden eines langgestreckten, von der einen bis zur anderen Fahrzeugseite reichenden Achskörpers. An einem äußeren Flansch 2 der Radnabe 1 kann auf einer Seite eine Bremsscheibe 4, und auf der gegenüberliegenden Seite das Fahrzeugrad mittels Radbolzen 7 befestigt sein. Hierzu befinden sich in dem Flansch 2 der Radnabe 1 Befestigungen mit Bohrungen zum Hindurchstecken der Radbolzen 7. Eine solche Radbefestigung und -lagerung eignet sich vor allem für nicht-angetriebene Fahrzeugachsen, z. B. mitlaufenden Achsen von Lkw-Anhängern.

Gemäß Fig. 3 ist das Achselement 6 als ein sich nach fahrzeugaußen hin verjüngender Achsschenkel gestaltet, auf dem Lagersitze für ein inneres Wälzlager 5A und ein äußeres Wälzlager 5B einer Wälzlagerung ausgebildet sind. Auf der so im Nabeninneren angeordneten Wälzlagerung ist die Radnabe 1 also frei drehbar gelagert.

Das Achselement 6 weist einwärts des inneren Wälzlagers 5A eine Stufe auf. Gegen die Stufe stützt sich der Innenring des Wälzlagers 5A unter axialer Zwischenlage eines Rings 10 ab. Der Ring 10 ist wegen seiner Abstützung gegen das Achselement feststehend ausgebildet Der Außenrand des Rings 10 weist einen geringen radialen Abstand gegenüber dem Innenumfang 15 der Radnabe 1 auf.

Weiter fahrzeuginnen ist am Innenumfang 15 der Radnabe eine umlaufende Nut ausgebildet, in die ein Sicherungsring 16 eingesetzt ist. Dieser bildet einen radialen Vorsprung im Vergleich zum Innenumfang 15 der Radnabe, mit dessen Hilfe sich die Nabe 1 einschließlich der Nabenlagerung als Einheit nach außen hin von dem Achsschenkel 6 herunterziehen lässt.

Nach fahrzeuginnen, d. h. zur Fahrzeugmitte hin, ist die Wälzlagerung durch eine in Verlängerung des Wälzlagers 5A angeordnete Dichtung 17 abgedichtet. Die Dichtung 17 umfasst den bereits erwähnten starren Ring 10 und außerdem eine zweiteilig aufgebaute Anordnung aus einem Innenring und einem Außenring. Innenring und Außenring sind so zueinander angeordnet, dass in axialer Richtung eine Verschachtelung erreicht wird.

Das innere Wälzlager 5A und das äußere Wälzlager 5B bilden gemeinsam mit der aus dem Ring, dem Innenring und dem Außenring bestehende Dichtung 17 die Nabenlagerung der Radnabe. Eine Besonderheit dieser Nabenlagerung besteht darin, dass sie sich gemeinsam mit der Radnabe 1 und der Wälzlagerung nach fahrzeugaußen von dem Achsschenkel 6 abziehen lässt. Das Grundprinzip hierzu ist in der EP 0 407 719 B1 beschrieben. Beim Abziehen wird die Dichtung 17 der Nabenlagerung durch den innen an der Radnabe 1 fixierten und als radialer Vorsprung dienenden Sicherungsring 16 hintergriffen. Dies ist möglich, da der Außendurchmesser der Dichtung 17 größer ist, als der Innendurchmesser 15 des Sicherungsrings 16. Beim Abziehen der Radnabe 1 gelangt der Sicherungsring 16 gegen den Außenring, dieser überträgt die Zugkräfte seinerseits axial auf den Ring 10, wodurch wiederum der Ring 10 die Axialkraft auf das Wälzlager 5A überträgt, und alle diese Teile mitgenommen werden. Ist die Radnabe 1 von dem Achselement 6 abgezogen, lassen sich nach Lösen des Sicherungsrings 16 alle Teile der Nabenlagerung aus der Radnabe 1 herausziehen, d. h. die Wälzlagerung, der Ring 10und die mehrteilige Dichtung 17.

Als Bestandteil elektrischen Vorrichtung zur Drehzahl- und/oder Drehrichtungserkennung ist an dem Achselement 6 ein Sensor 40, z. B. ein induktiv arbeitender ABS-Sensor, befestigt. Der Sensor 40 sitzt relativ stramm in einer den Sensor umgebenden Montagehülse 40a, die ihrerseits starr an oder in dem Achselement 6 befestigt ist.

Dem Sensierende des Sensors 40 direkt und mit sehr kurzem Abstand gegenüberliegend ist an der Radnabe 1 ein Polring 41 montiert, der also mit der Radnabe 1 umläuft und Bestandteil der Radnabenanordnung ist.

Der Polring 41 weist zu seiner Montage an einem das fahrzeuginnere Ende der Radnabe 1 bildenden Nabenhals 50 der Radnabe einen Befestigungsabschnitt 42 auf. Bestandteil des Polrings 41 ist ferner ein Impulsgeberabschnitt 43, welcher sich, von dem Befestigungsabschnitt 42 ausgehend, über die Stirnfläche 45 am Ende des Nabenhalses 50 hinüber nach innen erstreckt. An seinem radial inneren Rand ist der Impulsgeberabschnitt 43 mit einer Umbördelung 48 versehen, die zu einer Verstärkung des Polrings 41 gegenüber Biegebelastungen führt, was für den Montageprozess der Radnabenanordnung von Vorteil ist.

Über seinen Umfang gleichmäßig verteilt ist der Impulsgeberabschnitt 43 mit Öffnungen 44, 44L versehen, hier in Form von radialen Schlitzen unterschiedlicher Länge. Diese Öffnungen 44, 44L bzw. die Bereiche zwischen diesen Öffnungen sind durch den achsfesten Sensor 40 detektierbar. Der Polring 41 ist einstückig und er besteht aus preiswertem Metallblech, welches durch Biegen und Stanzen bearbeitet und mit den Schlitzen 44, 44L versehen ist.

Die Montage des Polrings 41 erfolgt daher auf dem nach fahrzeuginnen sich erstreckenden Nabenhals 50 der Nabe. Dieser Längsabschnitt der Radnabe 1 weist im Vergleich zu dem Befestigungsflansch 2 einen deutlich geringeren Durchmesser auf. Der Nabenhals 50 definiert mit seinem Innenumfang 15 eine Öffnung 55 für den zentralen Durchtritt des Achselements 6, und definiert auf seinem Außenumfang 51 eine zylindrische Fläche, auf der der Polring 41 montiert ist.

Axial stützt sich der Polring 41 nur gegen die bearbeitete, vorzugsweise spanend bearbeitete Stirnfläche 45 der Nabe ab. Dies führt zu einem sehr genauen Planlauf des Polrings, und damit zu einem exakten Sensorsignal. Zudem führt dieser Ort der axialen Abstützung zu einer verbesserten Festigkeit des Polrings, da dieser Biegebelastungen während des Montageprozesses besser aufnehmen bzw. aushalten kann.

Der Nabenhals 50 ist von solcher Länge, dass er innen zumindest Teile der mehrteiligen Nabenlagerung aufnimmt, nämlich die Dichtung 17, den Ring 10sowie eventuell das innere Wälzlager 5A. Um die axiale Länge des Nabenhalses 50 und damit auch die axiale Gesamtlänge der Radnabe 1 trotzdem gering zu halten, wird der Polring 41 nicht am Innenumfang 15 des Nabenhalses 50 befestigt, wo bereits die Nabenlagerung und der Sicherungsring angeordnet sind und entsprechend Platz beanspruchen. Stattdessen erfolgt die Befestigung des Polrings 41 auf dem Außenumfang 51 des Nabenhalses 50. Hierbei reicht, in Nabenlängsrichtung betrachtet, der Befestigungsabschnitt 42 bis über die Dichtung 17 der Nabenlagerung hinüber.

Der Polring 41 ist zwar gegen die Stirnfläche 45 axial abgestützt, wird aber außen auf der Radnabe 1 durch Reibschluss mittels Presssitz gehalten. Hierzu ist der als eine zylindrische Hülse gestaltete Befestigungsabschnitt 42 auf die gemeinsam mit der Stirnfläche 45 passgenau spanend bearbeitete zylindrische Fläche am Außenumfang 51 aufgesetzt. Die so bearbeitete Fläche ist zusätzlich mit einem Rostschutzmittel, wie z.B. einer geeigneten Lackierung behandelt.

Der Impulsgeberabschnitt 43 erfüllt zusätzlich zu seiner ABS-Geberfunktion die Funktion einer Barriere gegen ein Eindringen von groberen Schmutzpartikeln in das Nabeninnere, d.h. in den hinter dem Polring 41 gelegenen Nabenbereich. Dies gilt vor allem für solche Schmutzpartikel, deren Durchmesser größer ist, als die Breite der Schlitze 44, 44L. Denn solche Partikel, vor allem kleine Steinchen, werden durch die Barriere sicher zurückgehalten.

Zu diesem Zweck erstreckt sich der Impulsgeberabschnitt 43 so weit zu der Mittelachse A der Radnabe und damit der Mittelachse des Polrings hin, dass die eigentlich zwischen dem Innenumfang 15 der Radnabe 1 und der Außenseite des Achsschenkels 6 vorhandene, ringförmige Öffnung 55 zu ihrem größten Teil, nämlich zu mindestens 80 % bezogen auf die eigentliche Querschnittsfläche der Öffnung 55, zu dem Nabeninneren hin verschlossen bzw. abgedeckt ist. Für einen hohen Abdeckungsgrad sollte nicht nur die Innenseite der Nabe 1 ,sondern auch der Außenumfang des Achselements 6 im Bereich der Öffnung 55 einen kreisrunden Querschnitt aufweisen, wodurch geringe radiale Toleranzen möglich sind.

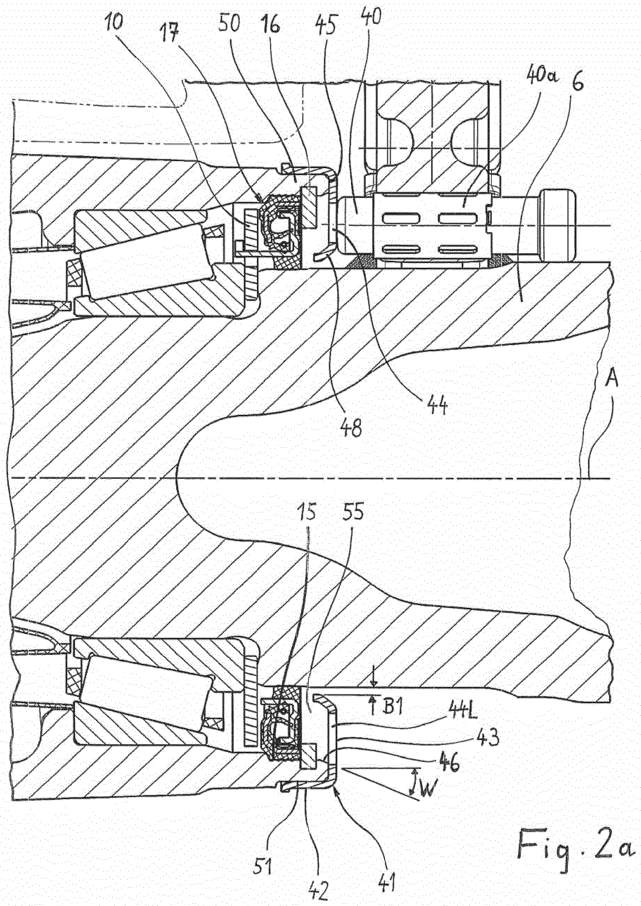

Vorzugsweise ist, wie in Fig. 2a dargestellt, die aufgrund der Abdeckung verbleibende Rest20 Öffnungsbreite B1 zwischen dem Innenrand des Impulsgeberabschnitts 43 und der Außenseite des Achselements 6 gleich oder geringer, als die Breite B2 der Schlitze 44, 44L. Partikel und vor allem kleine Steinchen, die die Schlitze 44, 44L wegen deren geringer Breite nicht mehr passieren können, werden dann auch im Bereich des so verbleibenden Restspalts B1 sicher zurückgehalten.

Um die Entwässerung zusätzlich zu verbessern, befindet sich im Übergang zwischen der Stirnfläche 45 und dem Innenumfang 15 eine umlaufende schräge Fase 46. Diese weist einen Winkel W zwischen 20° und 65° zur Radnabenachse A auf, und radial eine Erstreckung von mindestens 2 mm.

Gemäß Figur 3 weisen die längeren Öffnungen bzw. Schlitze 44L eine solche radiale Erstreckung RL nach außen hin auf, dass sie bis zu dem größten Radius der schrägen Fase 46 reichen. Im Nabeninneren angesammeltes Schmutzwasser und kleinere Schmutzpartikel können daher in jedem Fall durch die nach außen verlängerten Abschnitte der Schlitze 44L wieder austreten, was im Fahrbetrieb durch die Zentrifugalkräfte begünstigt wird.

Alle anderen Schlitze 44 hingegen weisen, damit der Polring 41 eine möglichst hohe mechanische Festigkeit beibehält, nur eine Länge und insbesondere eine Erstreckung R nach außen auf, die nicht größer ist, als dies für die sichere Sensierung durch den Sensor 40 technisch erforderlich ist. Über die kürzeren Schlitze erfolgt keine nennenswerteEntwässerung des Nabeninneren. Die längeren Schlitze 44L hingegen weisen eine Erstreckung RL nach radial außen auf, die größer ist, als die für die sichere Sensierung durch den Sensor 40 notwendige Erstreckung. Die radiale Erstreckung RL reicht z. B. zwischen 2 und 10 mm weiter nach außen, als die Erstreckung R.

Vorzugsweise ist nur jeder zweite Schlitz 44L verlängert, weist also die nach außen hin größere Erstreckung RL auf. Im Prinzip und mit im wesentlichen gleicher Wirkung für die angestrebte Entwässerung kann die Anzahl der die für die Sensierung notwendige Erstreckung R aufweisenden Öffnungen 44 ein ganzzahliges Vielfaches der die größere Erstreckung RL aufweisenden Öffnungen 44L betragen. Für die Montage der Radnabenanordnung auf dem Achsschenkel 6 wird der Polring 41 wie beschrieben auf dem Außenumfang 51 des Nabenhalses 50 befestigt, wobei sich der Polring axial gegen die Stirnfläche 45 des Nabenhalses 50 abstützt. Die so vorbereitete Einheit aus Radnabe 1 und Polring 41 wird, unter Zwischenlage der Wälzlager, auf den Achsschenkel 6 aufgeschoben. Zuvor wurde der Sensor 40 so in der Montagehülse 40a angeordnet, dass der Sensor 40 etwas zu weit in Richtung auf die Radnabe vorsteht. Beim Aufschieben der Radnabe stößt daher der Polring 41 gegen den Sensor 40, und schiebt diesen innerhalb der Montagehülse 40a zurück, bis die Radnabe 1 die endgültige Position auf dem Achsschenkel eingenommen hat. Da der Sensor 40 allerdings relativ stramm in der Montagehülse 40a sitzt, führt das Mitnehmen des Sensors zu einer deutlichen Belastung und insbesondere Biegebelastung auf den Polring 41. Dies ist der Grund dafür dass, wie zuvor beschrieben, die mechanische Festigkeit des Polrings 41 von besonderer Bedeutung ist.

## Patentansprüche

1. Polring (41) eines ABS-Sensors zur Drehsensierung eines Fahrzeugrades, mit einem Befestigungsabschnitt (42) zur Montage des Polrings an einer Nabe des Fahrzeugrades, und mit einem einstückig mit dem Befestigungsabschnitt (42) ausgebildeten Impulsgeberabschnitt (43), der sich, ausgehend von dem Befestigungsabschnitt (42), als in Umfangsrichtung geschlossener Ring (10) zu der Polringachse (A) hin erstreckt und mit in Umfangsrichtung gleichmäßig verteilten Öffnungen (44, 44L), vorzugsweise Schlitzen, versehen ist, **dadurch gekennzeichnet, dass** einige der verteilten Öffnungen (44L) bzw. Schlitze eine Erstreckung (RL) nach außen hin aufweisen, die größer ist, als die Erstreckung (R) anderer verteilten Öffnungen (44) bzw. Schlitze.

2. Polring (41) nach Anspruch 1, **dadurch gekennzeichnet, dass** die Erstreckung (R) die für die Sensierung durch den ABS-Sensor notwendige Erstreckung ist.

3. Polring (41) nach Anspruch 1 oder 2, **dadurch gekennzeichnet, dass** die Erstreckung (RL) nach außen hin zwischen 2 und 10 mm größer ist, als die Erstreckung (R) der anderen Öffnungen bzw. Schlitze.

4. Polring (41) nach einem der Ansprüche 1, 2 oder 3, **dadurch gekennzeichnet, dass** die Anzahl der die für die Sensierung notwendige Erstreckung (R) aufweisenden Öffnungen (44) ein ganzzahliges Vielfaches der eine größere Erstreckung (RL) aufweisenden Öffnungen (44L) beträgt.

5. Polring (41) nach einem der Ansprüche 1, 2 oder 3, **dadurch gekennzeichnet, dass** jede zweite Öffnung (44L) die größere Erstreckung (RL) aufweist.

6. Polring (41) nach Anspruch 4, **dadurch gekennzeichnet, dass** der Impulsgeberabschnitt 15 (43) an seinem Innenrand mit einer Umbördelung (48) versehen ist.

7. Radnabenanordnung für ein Fahrzeugrad,
mit einer über eine Nabenlagerung drehbar auf einem drehfesten Achsschenkel (6) angeordneten Radnabe (1), die fahrzeuginnen in einem Nabenhals (50) endet, dessen Innenumfang (15) eine Öffnung (55) für den zentralen Durchtritt des Achsschenkels (6) definiert, und
mit einem an dem Achsschenkel (6) befestigten ABS-Sensor (40),
wobei auf dem Nabenhals (50) ein Befestigungsabschnitt (42) eines Polrings (41) des ABS-Sensors (40) montiert ist,
wobei der Polring (41) als Polring (41) nach einem der vorhergehenden Ansprüche ausgebildet ist und
wobei der ABS-Sensor (40) die Öffnungen (44, 44L) bzw. Schlitze sensiert.

## Claims

1. A pole ring (41) of an ABS sensor for sensing the rotation of a vehicle wheel, with an attachment portion (42) for mounting the pole ring on a hub of the vehicle wheel, and with a pulse-generator portion (43) integrally formed with the attachment portion (42), which extends, starting from the attachment portion (42), as an in peripheral direction closed ring (10), toward the pole-ring axis (A), and is provided with openings (44, 44L), preferably slots, uniformly distributed in the peripheral direction,
**characterized in that**
some of the distributed openings (44L) or slots exhibit an outward extent (RL) that is larger than the extent (R) of other distributed openings (44) or slots.

2. The pole ring (41) according to claim 1,
**characterized in that**
the extent (R) is the extent necessary for the sensing by the ABS sensor.

3. The pole ring (41) according to claim 1 or 2,
**characterized in that**
the outward extent (RL) is between 2 mm and 10 mm larger than the extent (R) of the other openings or slots.

4. The pole ring (41) according to any one of claims 1, 2 or 3,
**characterized in that**
the number of openings (44) exhibiting the extent (R) necessary for the sensing amounts to an integral multiple of the openings (44L) exhibiting a larger extent (RL).

5. The pole ring (41) according to any one of claims 1, 2 or 3,
**characterized in that**
every second opening (44L) exhibits the larger extent (RL).

6. The pole ring (41) according to claim 4,
**characterized in that**
the pulse-generator portion (43) is provided with a bead (48) on its inner edge.

7. A wheel-hub assembly for a vehicle wheel,
with a wheel hub (1) which is arranged so as to be capable of rotating on a torsion-resistant steering knuckle (6) via a hub bearing assembly and which terminates inside the vehicle in a hub neck (50), the inner periphery (15) of which defines an opening (55) for the central passage of the steering knuckle (6), and with an ABS sensor (40) mounted on the steering knuckle (6),
wherein an attachment portion (42) of a pole ring (41) of the ABS sensor (40) is mounted on the hub neck (50),
wherein the pole ring (41) is formed as a pole ring (41) according to any one of the preceding claims,
and wherein the ABS sensor (40) senses the openings (44, 44L) or slots.

## Revendications

1. Anneau polaire (41) d'un capteur ABS pour la détection de rotation d'une roue de véhicule, avec une partie de fixation (42) pour le montage de l'anneau polaire sur un moyeu de la roue du véhicule, et avec une section génératrice d'impulsions (43) formée en une seule pièce avec la partie de fixation (42), qui, à partir de la partie de fixation (42), s'étend en direction de l'axe de l'anneau polaire (A) sous la forme d'un anneau (10) fermé en direction circonférentielle et est pourvu d'ouvertures (44, 44L), de préférence des fentes, réparties de manière uniforme en direction circonférentielle, **ce qui est caractérisé en ce que** quelques-unes des ouvertures réparties (44L) ou fentes présentent une extension (RL) vers l'extérieur qui est plus grande que l'extension (R) d'autres ouvertures réparties (44) ou fentes.

2. Anneau polaire (41) selon la revendication 1, **caractérisé en ce que** l'extension (R) est l'extension nécessaire à la détection par le capteur ABS.

3. Anneau polaire (41) selon la revendication 1 ou 2, **caractérisé en ce que** l'extension (RL) vers l'extérieur est supérieure de 2 à 10 mm à l'extension (R) des autres ouvertures ou fentes.

4. Anneau polaire (41) selon l'une des revendications 1, 2 ou 3, **caractérisé en ce que** le nombre d'ouvertures (44) présentant l'extension (R) nécessaire à la détection est un multiple entier du nombre des ouvertures (44L) présentant une extension plus grande (RL).

5. Anneau polaire (41) selon l'une quelconque des revendications 1, 2 ou 3, **caractérisé en ce que** chaque deuxième ouverture (44L) présente une extension plus grande (RL).

6. Anneau polaire (41) selon la revendication 4, **caractérisé en ce que** la section génératrice d'impulsions 15 (43) est, sur son bord intérieur, pourvue d'un repli (48).

7. Agencement de moyeu de roue pour une roue de véhicule, comprenant un moyeu de roue (1) monté de manière rotative, via un palier de moyeu, sur un bras de fusée (6) solidaire en rotation, ledit moyeu se terminant côté intérieur du véhicule par un col de moyeu (SO) dont le périmètre intérieur (15) définit une ouverture (55) pour le passage central du bras de fusée (6), et avec un capteur ABS (40) fixé sur le bras de fusée (6),
où, sur le col de moyeu (SO), est montée une partie de fixation (42) d'un anneau polaire (41) du capteur ABS (40),
où l'anneau polaire (41) est formé en tant qu'anneau polaire (41) selon l'une des revendications précédentes et
où le capteur ABS (40) détecte les ouvertures (44, 44L) ou respectivement les fentes.
